# EUROPÄISCHE PATENTANMELDUNG

(11) **EP 0 921 583 A1**
(43) Veröffentlichungstag der Anmeldung: **09.06.1999**
(21) Anmeldenummer: 97121479.6
(22) Anmeldetag: 05.12.1997
(51) Int. Cl.: H01M 8/02, H01M 2/08, C03C 8/24

(54) **Abdichten von Hochtemperatur-Brennstoffzellen und von Hochtemperatur-Brennstoffzellenstapel**

(71) Anmelder: SIEMENS AKTIENGESELLSCHAFT, 80333 München (DE)
(72) Erfinder: Fleck, Robert, Dipl.-Phys., 91325 Adelsdorf (DE); Jansing, Thomas, Dipl.-Min., 90425 Nürnberg (DE)

(57) **Zusammenfassung**

Die vorliegende Hochtemperatur-Brennstoffzelle (2) besitzt zwei plattenartige Bauelemente (4,6), die in einem Fügebereich (8) durch eine erste Schicht (22) aus einem Glaslot miteinander gefügt sind. Wenigstens eines der beiden Bauelemente (4,6) weist im Fügebereich wenigstens eine kanalartige Aussparung (14,16) in ihrer dem anderen Bauelement (4,6) zugewandten Oberfläche (12,20) auf. Die kanalartige Aussparung (14,16) ist teilweise mit der ersten Schicht (22) gefüllt. Durch diese Maßnahme wird eine Leckbildung in der Hochtemperatur-Brennstoffzelle (2) weitgehend vermieden und die Einsatzzeit selbiger verlängert.

## Beschreibung

Die Erfindung bezieht sich auf eine Hochtemperatur-Brennstoffzelle und auf einen Hochtemperatur-Brennstoffzellenstapel.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff (H₂) und Sauerstoff (O₂) zu Wasser entsteht elektrischer Strom mit hohem Wirkungsgrad und, wenn als Brenngas reiner Wasserstoff (H₂) eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Beim Zusammenbau einer Hochtemperatur-Brennstoffzelle werden benachbarte plattenartige Bauelemente miteinander gefügt. Gefügt werden beispielsweise zwei Verbundleiterplatten miteinander oder ein Rahmen mit einer Verbundleiterplatte. Ein solcher Rahmen dient beispielsweise zur Aufnahme von Elektrolyt-Elektroden-Einheiten. Unter Fügen versteht man das passende Aneinandersetzen oder Verbinden von Werkstücken oder Werkstoffen durch verschiedene Verfahren (beispielsweise durch Schrauben, Nieten, Schweißen, Walzen, usw.). Dementsprechend wird als Fuge die Trennungsöffnung zwischen zwei zu verbindenden Werkstücken bezeichnet.

An die Schicht oder die Schichten zum Schließen der Fuge zwischen zwei plattenartigen Bauelementen (genauer im äußeren Fügebereich der Bauelemente) werden verschiedene Anforderungen bezüglich ihrer Werkstoffeigenschaft gestellt: Der Werkstoff der Schicht muß eine ausreichende elektrische Isolation gewährleisten, um einen elektrischen Stromfluß zwischen den beiden Verbundleiterplatten zu unterbinden. Außerdem muß die Schicht stabil gegenüber Druckunterschieden zwischen dem Innenraum der Brennstoffzelle und der äußeren Umgebung ausgelegt sein. Die Betriebsmittel im Innenraum der Brennstoffzelle besitzen einen erhöhten Druck gegenüber der Außenatmosphäre, wodurch beim Betrieb eine Druckdifferenz zwischen Innenraum und Umgebung gegeben ist. Desweiteren muß ein sicheres mechanisches Absetzen beim Einsatz der Brennstoffzelle in einem Hochtemperatur-Brennstoffzellenstapel gewährleistet sein. Dies wird im Stand der Technik durch eine Gewichtslast auf dem Stapel und durch geeignete Auslegung der Lötgeometrie sowie durch die Auswahl des Lotes erreicht.

Eine Temperaturbeständigkeit des Werkstoffes bei Änderungen der Betriebstemperatur T zwischen beispielsweise 800 und 1000 °C sowie beim Ein- und/oder Abschalten der Brennstoffzelle sind eine weitere Anforderung. Die Qualität der Fügezonen ist ein Maß für die Langlebigkeit der Brennstoffzelle und auch des Hochtemperatur-Brennstoffzellenstapels.

Bei den aus dem Stand der Technik bekannten Brennstoffzellen wird als Werkstoff für die Schicht der zu schließenden Fuge ein Glaslot, welches auch als Lötglas bezeichnet wird, eingesetzt. Als Glaslot wird ein leicht schmelzendes Glas mit niedriger Viskosität und kleiner Oberflächenspannung bei einer Verschmelzungstemperatur zwischen 400 und 1200 °C bezeichnet. Es wird zwischen thermisch entglasbaren (kristallisierenden) und relativ entglasungsfesten Glasloten unterschieden. Das Glaslot dient dazu, spezielle Teile (Komponenten) mit anderen Gläsern, mit Metallen oder mit keramischen Werkstoffen zu fügen, ohne daß die speziellen Teile sich verformen.

Das Glaslot wird beispielsweise in Form einer strukturierten Folie auf die im Fügebereich nahezu plane metallische Verbundleiterplatte aufgelegt und bei erhöhter Temperatur verlötet.

Um den mechanischen Anforderungen der Hochtemperatur-Brennstoffzelle (wie beispielsweise gutes Absetzverhalten und Vermeidung des Aufbaues von mechanischen Spannungen) zu genügen, besitzt die Schicht zum Fügen der Verbundleiterplatten eine Dicke von wenigstens 150 µm. Bei solchen Schichtdicken ist eine mechanische Stabilität nur für Druckdifferenzen, beispielsweise zwischen dem Betriebsmittel im Innenraum der Brennstoffzelle und der Umgebung, kleiner 100 mbar bei einer Betriebstemperatur T von angenähert 950 °C gewährleistet. Mit anderen Worten wird das Glaslot, d.h. der Werkstoff mit dem die Fuge geschlossen wird, während des Betriebes aufgrund der Druckdifferenz sozusagen aus der Brennstoffzelle 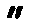 herausgeblasen". Die Schicht löst sich wenigstens teilweise mit zunehmender Betriebsdauer auf und es bildet sich eine Leckage zwischen dem Innenraum der Brennstoffzelle und ihrer Umgebung. Die Lebensdauer der Brennstoffzelle wird dadurch entscheidend verringert.

Der Erfindung liegt nun die Aufgabe zugrunde, eine Hochtemperatur-Brennstoffzelle mit einer langen Lebensdauer anzugeben.

Bei einer Hochtemperatur-Brennstoffzelle mit zwei plattenartigenBauelementen, die in einem Fügebereich durch eine erste Schicht aus einem Glaslot miteinander gefügt sind, ist gemäß der Erfindung wenigstens eines der beiden Bauelemente im Fügebereich mit wenigstens einer kanalartigen Aussparung in ihrer dem anderen Bauelement zugewandten Oberfläche versehen und die kanalartige Aussparung teilweise mit der ersten Schicht gefüllt.

Die Abdichtung erfolgt somit dort im Fügebereich, wo keine kanalartige Aussparung vorgesehen ist. Die kanalartige Aussparung dient als Vorratsbehälter für das Glaslot. Wird daher während des Betriebes der Brennstoffzelle ein Anteil an Glaslot, der sich zwischen den beiden Oberflächen der plattenartigen Bauelemente befindet, aufgrund der Druckdifferenz zwischen Innenraum und Umgebung 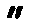 herausgedrückt", so wird dieser fehlende Anteil durch das Glaslot aus der kanalartigen Aussparung ersetzt. Eine sich bildende Leckage zwischen Innenraum und Umgebung wird somit unmittelbar automatisch repariert (d.h. mit dem Glaslot aus der kanalartigen Aussparung wieder aufgefüllt). Während bei einer aus dem Stand der Technik bekannten Brennstoffzelle aufgrund der Undichtigkeit der Schicht kein störungsfreier Betrieb mehr möglich ist, kann mit der erfindungsgemäßen Brennstoffzelle noch weiter störungsfrei gearbeitet werden. Diese Brennstoffzelle besitzt gegenüber den aus dem Stand der Technik bekannten Brennstoffzellen wenigstens eine um den Faktor 10 längere Lebensdauer.

Durch die kanalartige Aussparung wird die Größe der Fläche, die auf das Glaslot drückt, deutlich reduziert. Bei gleichbleibender Gewichtslast auf dem Brennstoffzellenstapel steigt der Druck auf den Fügebereich im Vergleich zu einem Fügebereich ohne kanalartige Aussparung entsprechend an. Da das Fügematerial der Verformung einen Widerstand entgegensetzt, der überproportional mit der Breite der Fügezone ansteigt, weist eine Brennstoffzelle mit einem Fügebereich mit kanalartiger Aussparung ein deutlich verbessertes Absetzverhalten auf.

Vorzugsweise sind in die Oberfläche des ersten Bauelements zwei angenähert parallel verlaufende kanalartige Aussparungen eingearbeitet, die durch einen Steg voneinander getrennt sind. Die optimale Abdichtung erfolgt hierbei zwischen dem Steg des ersten Bauelements und den gegenüberliegenden Teilbereich der zweiten Bauelements. Diese Ausführungsform ist mit geringem finanziellen Aufwand zu erstellen und erfordert nur einen geringne technischen Aufwand. Beim Fügeprozeß wird vorteilhaft die erste Schicht aus dem Glaslot zunächst auf das zweite Bauelement aufgetragen und anschließend unter erhöhtem Druck mit dem ersten Bauelement (mit den parallel verlaufenden kanalartigen Aussparungen in der Oberfläche) gefügt. Aufgrund des erhöhten Druckes wird ein Anteil des Glaslotes von der Oberfläche des ersten Bauelements in die beiden kanalartigen Aussparungen verdrängt, wo es als Reserve zum Abdichten während des Betriebes der Brennstoffzelle zur Verfügung steht. Ebenfalls denkbar sind Ausführungsformen, bei denen mehrere kanalartige Ausparungen sowohl in die Oberfläche des ersten Bauelements als auch in die Oberfläche des zweiten Bauelements mit beliebiger Geometrie eingearbeitet sind.

Insbesondere kann der Steg eine Breite zwischen 0,5 und 1 mm bei einer Höhe zwischen 100 und 300 µm aufweisen, wobei die kanalartigen Aussparungen bis zu 2 mm breit sein können. Die effektivste Abdichtung erhält man unmittelbar auf dem Steg. Bei diesen Breiten für den Steg (die erste Schicht hat vorzugsweise eine Dicke von angenähert 50 µm) steht somit ein "Vorratsbehälter" zur Verfügung, der doppelt so breit und mehrfach so hoch wie die erste Schicht im Bereich oberhalb des Steges ist. Es kann somit genügend Vorrat an Glaslot in den kanalartigen Aussparungen angelegt werden, der den beim Betrieb der Hochtemperatur-Brennstoffzelle verloren gehenden Anteil an Glaslot im Fügebereich ersetzt.

In einer weiteren Ausgestaltung besitzt der Fügebereich eine Breite zwischen 5 und 8 mm. Daher sind zwei kanalartige Aussparungen mit den angegebenen Breiten zum Abdichten am besten geeignet. Die kanalartigen Aussparungen verlaufen im wesentlichen parallel zu den äußeren Begrenzungen der zu fügenden Bauelemente.

Vorzugsweise enthält das Glaslot der ersten Schicht etwa 14 Gew.-% B₂O₃, 11 Gew.-% Al₂O₃, 50 Gew.-% SiO₂, 0,5 Gew.-% As₂O₃ und 0,5 Gew.-% BaO. Dieses Glaslot hat sich in der Praxis am besten bewährt.

Insbesondere können die kanalartigen Aussparungen durch die erste Schicht bis zu 80 % ausgefüllt sein. Damit steht immer noch genügend Freiraum zum Ausgleichen von mechanischen Spannungen zur Verfügung, die bei mechanischen Belastungen (z.B. einem erhöhten Druck aufgrund des Eigengewichts) oder bei thermisch bedingten Längenausdehnungen auftreten können.

In einer weiteren Ausgestaltung ist zwischen der ersten Schicht aus dem Glaslot und dem zweiten Bauelement eine zweite Schicht aus einer Keramik, insbesondere einer Glaskeramik, angeordnet. 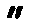 Glaskeramik" (auch Vitrokeram genannt) ist eine Bezeichnung für einen polykristallinen Festkörper, der durch Keramisierung, d.h. durch gesteuerte Entglasung (Kristallisation), von Glas hergestellt wird. Die Glaskeramik entsteht durch Wärmebehandlung eines geeigneten Glases, in welchem dadurch Kristalle erzeugt werden. Der glaskeramische Werkstoff enthält ebenso wie ein keramischer Werkstoff noch einen gewissen Anteil an Glasphase neben den Kritallen. Mit dieser zweiten Schicht, die vorzugsweise eine Dicke bis zu 600 µm aufweist, wird der Lötspalt zwischen den beiden Verbundleiterplatten auf die gewünschte Lötspaltbreite aufgefüllt. Außerdem wird dadurch ein verbessertes elektrisches Isolationsverhalten zwischen den beiden Bauelementen erreicht.

Vorzugsweise sind als Bauelemente Verbundleiterplatten vorgesehen. Insbesondere kann wenigstens eines der beiden Bauelemente ein Rahmen sein.

Gemäß der Erfindung setzt sich ein Hochtemperatur-Brennstoffzellenstapel aus solchen Hochtemperatur-Brennstoffzellen zusammen. Der Brennstoffzellenstapel enthält in der Regel wenigstens vierzig Brennstoffzellen.

Weitere vorteilhafte Ausgestaltungen sind in den Unteransprüchen wiedergegeben.

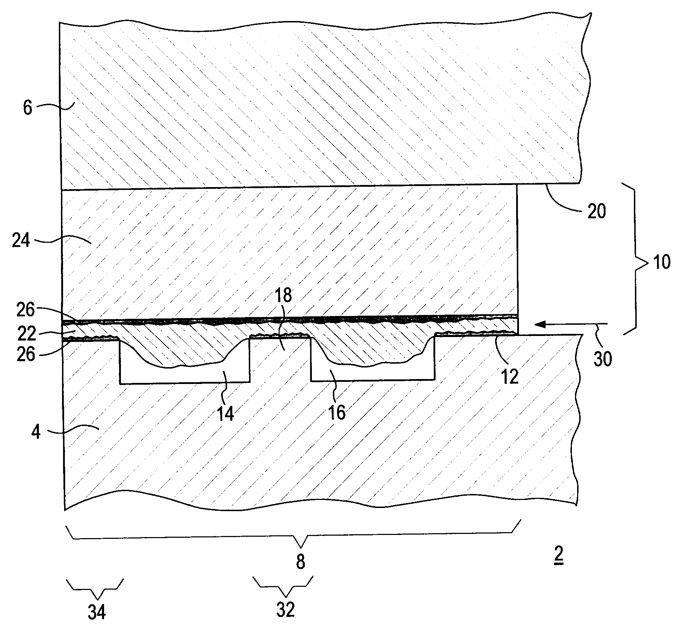

Zum besseren Verständnis der Erfindung und ihrer Weiterbildungen werden mehrere Ausführungsbeispiele anhand einer Figur erläutert. Die Figur zeigt einen Ausschnitt aus einer Hochtemperatur-Brennstoffzelle in schematischer Darstellung.

In der FIG erkennt man eine Hochtemperatur-Brennstoffzelle 2 (Brennstoffzelle 2) mit einem ersten und einem zweiten plattenartigen Bauelement 4, 6. Die Bauelemente 4, 6 können beispielsweise beide als Verbundleiterplatten ausgeführt sein. Ebenso kann aber auch wenigstens eines der beiden plattenartigen Bauelemente 4,6 ein Rahmen sein. Der Rahmen kann beispielsweise zur Aufnahme von Elektrolyt-Elektroden-Einheiten dienen, die zwischen den Verbundleiterplatten angeordnet sind.

Zwischen dem ersten 4 und dem zweiten Bauelement 6 ist in einem Fügebereich 8 eine Fuge 10 gebildet, die den gewünschten Abstand zwischen den beiden Bauelementen 4, 6 definiert. Der Fügebereich 8 ist im Randbereich der Brennstoffzelle 2 angeordnet.

Im Fügebereich 8 sind in die Oberfläche 12 (die dem zweiten Bauelement 6 zugewandt ist) des ersten Bauelements 4 zwei kanalartige Aussparungen 14, 16 eingearbeitet. Die kanalartigen Aussparungen 14, 16 sind durch einen Steg 18 voneinander getrennt. Der Steg 18 besitzt eine Breite zwischen 0,5 und 1 mm, wobei er eine Höhe zwischen 100 und 300 µm aufweist. Der gesamte Fügebereich 8 weist eine Breite zwischen 5 und 8 mm auf, wobei die kanalartigen Aussparungen 14, 16 eine Breite bis zu 2 mm aufweisen.

Die Fuge 10, die zwischen der Oberfläche 12 der ersten Verbundleiterplatte 4 und der Oberfläche 20 des zweiten Bauelements 6 angeordnet ist, ist durch eine erste Schicht 22 und eine zweite Schicht 24 im Fügebereich 8 gefüllt. Die erste Schicht 22 ist unmittelbar auf der Oberfläche 12 der ersten Verbundleiterplatte 4 angeordnet. Im Bereich der kanalartigen Aussparungen 14, 16 ist sie teilweise (dabei nimmt sie bis zu 80 % der kanalartigen Aussparungen 14, 16 ein) in die kanalartigen Aussparungen 14, 16 eingedrungen. Im Bereich oberhalb der Oberfläche 12 weist die erste Schicht 22 aus einem Glaslot eine Dicke von ca. 50 µm auf.

Das Glaslot der ersten Schicht 22 weist bei einer Temperatur von angenähert 1000 °C eine Viskosität η kleiner 10⁵ Ns/m² auf. Diese kleine Viskosität η ist zum Vermeiden von mechanischen Spannungen im Fugebereich 8 notwendig. Als Glaslot eignet sich besonders ein Werkstoff, der etwa 14 Gew.-% B₂O₃, 11 Gew.-% Al₂O₃, 50Gew.-% SiO₂, 0,5 Gew.-% As₂O₃ und 0,5 Gew.-% BaO enthält. Auf die erste Schicht 22 ist die zweite Schicht 24 aus einer Keramik, insbesondere einer Glaskeramik, angeordnet. Die zweite Schicht 24 füllt somit die verbleibende Lötspalthöhe zwischen den beiden Bauelementen 4, 6 auf. Sie dient somit als Abstandshalter zwischen den beiden Bauelementen 4, 6 und verbessert außerdem die elektrische Isolation zwischen ihnen. Die zweite Schicht 24 weist eine Dicke bis zu 600 µm auf.

Bei kleineren Abständen zwischen zu fügenden Bauelementen (beispielsweise bedingt durch eine andere Konstruktion der Bauelemente im Randbereich) kann auf diese zusätzliche zweite Schicht 24 als Abstandshalter verzichtet werden, soweit das Glaslot der ersten Schicht eine ausreichende elektrische Isolation aufweist. Die Fuge zwischen den Bauelementen wird dann allein durch eine Schicht aus einem Glaslot ausgefüllt.

Als Werkstoff für die zweite Schicht 24 wird beispielsweise eine Glaskeramik oder Zirkonoxid (ZrO₂), Aluminiumoxid (Al₂O₃) und/oder Spinell verwendet.

Zum Herstellen dieser Fügeverbindung (im Fügebereich 8) wird zunächst die zweite Schicht 24 beispielsweise durch Atmosphärisches-Plasmaspritzen (APS) oder durch Vakuum-Plasmaspritzen (VPS) auf die Oberfläche 20 des zweiten metallischen Bauelements 6 aufgetragen und anschließend ausgehärtet. Nach dem Aushärten weist die zweite Schicht 24 keine flüssigen Bestandteile mehr auf. In einem zweiten Schritt wird auf die zweite Schicht 24 die erste Schicht 22 aus einem Glaslot aufgetragen. Auf diese erste Schicht 22 (die im zu bearbeitenden Zustand eine Dicke zwischen 300 und 500 µm aufweist) wird das erste Bauelement 4 bei erhöhtem Druck angeordnet. Beim Löten und Absetzen des Verbundes dringt ein Teil der ersten Schicht 22 (d.h. ein Teil des Glaslotes) in die kanalartigen Aussparungen 14, 16 ein. Abschließend wird die Fuge 10 verlötet und erneut ausgehärtet.

Im Randbereich der ersten Schicht 22 aus dem Glaslot zur zweiten keramischen Schicht 24 und zur Oberfläche 12 des ersten Bauelements 4 wird das Glaslot wenigstens teilweise entglast (d.h. kristallisiert). Da die erste Schicht 22 eine Schichtdicke von etwa 50 µm aufweist, ist die effektive Schichtdicke für den viskosen Anteil an Glaslot (bedingt durch den auskristallisierten und damit festen Anteil) der ersten Schicht 22 wesentlich verringert.

Während des Betriebes der Brennstoffzelle 2 entsteht zwischen ihrem Innenraum 28 (mit dem Betriebsmittel, das einen erhöhten Druck aufweist) und der äußeren Umgebung ein Druckgefälle, das zu einem Druck in Richtung des Pfeiles 30 führt. Der immer noch niedrigviskose Anteil an Glaslot in der ersten Schicht 22 (auf den aufgrund der mechanischen Anforderungen nicht verzichtet werden kann) wird nun bei zunehmender Betriebsdauer der Brennstoffzelle 2 teilweise aus der Fuge 8 herausgedrückt (d.h. an die Umgebung abgegeben). Das in den kurzen Dichtungsbereichen 32, 34 nun fehlende Glaslot wird durch das Glaslot aus den kanalartigen Aussparungen 14, 16 unverzüglich aufgefüllt. Aufgrund der kleinen Volumina an Glaslot in den Dichtungsbereichen 32, 34 im Verhältnis zu den Volumina an Glaslot in den kanalartigen Aussparungen 14, 16 wird eine Dichtigkeit der Fuge 10 der Brennstoffzelle 2 erreicht, die die Einsatzzeit (und die Lebensdauer) der Brennstoffzelle 2 gegenüber den aus dem Stand der Technik bekannten Brennstoffzellen um wenigstens dem Faktor 10 verlängert.

Da neben dem Dichtungsbereich 32 auch der am Rand der Bauelemente 4, 6 angeordnete Dichtungsbereich 34 (vorzugsweise gespeist durch die kanalartige Aussparung 14) die Brennstoffzelle 2 im Fügebereich 8 abdichtet, ist wenigstens eine zweichfache Abdichtung der Fuge 10 im Fügebereich 8 vorgegeben.

Eine Vielzahl solcher plattenartiger Bauelemente werden übereinander zu einem Hochtemperatur-Brennstoffzellenstapel zusammengesetzt, wobei jeweils zwei benachbarte Bauelemente (als Verbundleiterplatten ausgeführt) eine Brennstoffzelle bilden. Bei einem Hochtemperatur-Brennstoffzellenstapel ist die Dichtigkeit der Brennstoffzellen gegenüber einem Austritt von Betriebsmitteln aus den Brennstoffzellen von besonderer Bedeutung. Eine einzige defekte Brennstoffzelle (mit einer Leckage) kann zum Ausfall des gesamten Hochtemperatur-Brennstoffzellenstapels führen, weswegen einer Verlängerung der Lebensdauer der Brennstoffzellen (und damit des Hochtemperatur-Brennstoffzellenstapels) für einen Einsatz zur Stromerzeugung eine entscheidende Bedeutung zukommt.

## Patentansprüche

1. Hochtemperatur-Brennstoffzelle (2) mit zwei plattenartigen Bauelementen (4,6), die in einem Fügebereich (8) durch eine erste Schicht (22) aus einem Glaslot miteinander gefügt sind, wobei wenigstens eines der beiden Bauelemente (4,6) im Fügebereich wenigstens eine kanalartige Aussparung (14,16) in ihrer dem anderen Bauelement (4,6) zugewandten Oberfläche (12,20) aufweist und die kanalartige Aussparung (14,16) teilweise mit der ersten Schicht (22) gefüllt ist.

2. Brennstoffzelle (2) nach Anspruch 1,
**dadurch gekennzeichnet**, daß in die Oberfläche (12) des einen Bauelements (4) zwei angenähert parallel verlaufende kanalartige Aussparungen (14,16) eingearbeitet sind, die durch einen Steg (18) voneinander getrennt sind.

3. Brennstoffzelle (2) nach Anspruch 2,
**dadurch gekennzeichnet**, daß der Steg (18) eine Breite zwischen 0,5 und 1 mm aufweist.

4. Brennstoffzelle (2) nach Anspruch 2 oder 3,
**dadurch gekennzeichnet**, daß der Steg (18) eine Hohe zwischen 100 und 300 µm aufweist.

5. Brennstoffzelle (2) nach einem der vorhergehenden Ansprüche, **dadurch gekennzeichnet**, daß die kanalartigen Aussparungen (14,16) jeweils eine Breite bis zu 2 mm aufweisen.

6. Brennstoffzelle (2) nach einem der vorhergehenden Ansprüche, **dadurch gekennzeichnet**, daß der Fügebereich (8) eine Breite zwischen 5 und 8 mm aufweist.

7. Brennstoffzelle (2) nach einem der vorhergehenden Ansprüche, **dadurch gekennzeichnet**, daß das Glaslot der ersten Schicht (22) eine Viskosität η kleiner 10⁵ Ns/m² bei einer Temperatur von angenähert 1000 °C aufweist.

8. Brennstoffzelle (2) nach einem der vorhergehenden Ansprüche, **dadurch gekennzeichnet**, daß das Glaslot etwa 14 Gew.-% B₂O₃, 11 Gew.-% Al₂O₃, 50 Gew.-% SiO₂, 0,5 Gew.-% As₂O₃ und 0,5 Gew.-% BaO enthält.

9. Brennstoffzelle (2) nach einem der vorhergehenden Ansprüche, **dadurch gekennzeichnet**, daß die erste Schicht (22) auf der Oberfläche (12) eine Dicke von angenähert 50 µm aufweist.

10. Brennstoffzelle (2) nach einem der vorhergehenden Ansprüche, **dadurch gekennzeichnet**, daß die kanalartigen Aussparungen (14,16) durch die erste Schicht (22) bis zu 80 % ausgefüllt ist.

11. Brennstoffzelle (2) nach einem der vorhergehenden Ansprüche, **dadurch gekennzeichnet**, daß zwischen der ersten Schicht (22) und einer zweiten Verbundleiterplatte (6) eine zweite Schicht (24) aus einer Keramik, insbesondere aus einer Glaskeramik, angeordnet ist.

12. Brennstoffzelle (2) nach Anspruch 11,
**dadurch gekennzeichnet**, daß die zweite Schicht (24) eine Dicke bis zu 600 µm aufweist.

13. Brennstoffzelle (2) nach einem der vorhergehenden Ansprüche, **dadurch gekennzeichnet**, daß als Bauelemente (4,6) Verbundleiterplatten vorgesehen sind.

14. Brennstoffzelle (2) nach einem der Ansprüche 1 bis 12, **dadurch gekennzeichnet**, daß wenigstens eines der beiden Bauelemente (4,6) ein Rahmen ist.

15. Hochtemperatur-Brennstoffzellenstapel, der eine Vielzahl übereinander angeordneter Verbundleiterplatten mit dazwischen liegenden Elektrolyten aufweist, wobei jeweils zwei benachbarte Verbundleiterplatten eine Hochtemperatur-Brennstoffzelle (2) nach einem der Ansprüche 1 bis 13 bilden.
